# EUROPÄISCHE PATENTSCHRIFT

(11) **EP 3 643 601 B1**
(45) Veröffentlichungstag und Bekanntmachung des Hinweises auf die Patenterteilung: **09.03.2022**
(21) Anmeldenummer: 19195949.3
(22) Anmeldetag: 06.09.2019
(51) Int. Cl.: B64C 3/48

(54) **VORRICHTUNG UND VERFAHREN ZUM BEWEGLICHEN BEFESTIGEN EINES FAHRZEUGSYSTEMS AN EINER PRIMÄRSTRUKTUR EINES FAHRZEUGS**
DEVICE AND METHOD FOR MOBILE FIXING OF A VEHICLE SYSTEM TO A PRIMARY STRUCTURE OF A VEHICLE
DISPOSITIF ET PROCÉDÉ DE MONTAGE MOBILE D'UN SYSTÈME DE VÉHICULE À UNE STRUCTURE PRIMAIRE D'UN VÉHICULE

(30) Priorität: 24.10.2018 DE 102018126561
(43) Veröffentlichungstag der Anmeldung: 29.04.2020
(73) Patentinhaber: Airbus Defence and Space GmbH, 82024 Taufkirchen (DE)
(72) Erfinder: Sarraf, Robert Cheikh, 82024 Taufkirchen (DE)
(74) Vertreter: LKGLOBAL Lorenz & Kopf PartG mbB Patentanwälte

(56) Entgegenhaltungen:
- DE-A1-102017 216 397
- GB-A- 1 496 519
- US-A- 4 131 253
- US-A- 4 351 502

## Beschreibung

### Gebiet der Erfindung

Die vorliegende Erfindung betrifft die Befestigung von Fahrzeugsystemen an Primärstrukturelementen eines Fahrzeugs. Insbesondere betrifft die Erfindung eine Vorrichtung zur beweglichen Befestigung eines Fahrzeugsystems an einer Primärstruktur eines Fahrzeugs sowie die Verwendung einer solchen Vorrichtung zur Befestigung eines Hinterkanten-Klappensystems eines Tragflügels eines Luftfahrzeugs an einer Primärstruktur des Luftfahrzeugs. Ferner betrifft die Erfindung ein Verfahren zum beweglichen Befestigen eines Fahrzeugsystems an einer Primärstruktur eines Fahrzeugs.

### Hintergrund der Erfindung

Heutzutage sind verschiedene Techniken zur Befestigung einer Fahrzeugkomponente, beispielsweise einer Steuerkomponente, an einem Fahrzeug oder einer Primärstruktur des Fahrzeugs bekannt. Dabei kommen insbesondere mechanische Systeme zur Anwendung, welche jedoch oft einen großen Bauraum in Anspruch nehmen und daher für viele Anwendungszwecke ungeeignet sind oder zu Nachteilen, wie zum Beispiel einen erhöhten Luftwiderstand oder ein erhöhtes Gewicht, führen. Dies macht sich insbesondere in Anwendungsgebieten wie der Fahrzeugtechnik, der Luft- und Raumfahrttechnik oder der Schiffstechnik bemerkbar, bei denen strömungsmechanisch günstige Anordnungen von Komponenten, geringe Baugrößen und ein geringes Gewicht von großer Bedeutung sind.

Die US 2016/0047246 A1 offenbart eine Morphing-Hinterkantenvorrichtung für ein Strömungsprofil mit einem Hautelement, einem Aktuator und einem Torsionselement. Das Hautelement ist so konfiguriert, dass es sich auf einer Oberfläche eines Hinterkantenbereichs des Strömungsprofils erstreckt, und umfasst einen Lasteinleitungspunkt innerhalb eines verstärkten Bereichs. Das Hautelement umfasst ferner ein Versteifungselement, das im Wesentlichen senkrecht zu dem Lasteinleitungspunkt angeordnet ist, wobei der Lasteinleitungspunkt, der verstärkte Bereich und das Versteifungselement in das Hautelement integriert sind.

Die EP 2 886 451 A1 offenbart ein Hinterkanten-Klappensystem für einen Flügel eines Luftfahrzeugs, wobei der Flügel eine Flügelstruktur aufweist, wobei das Hinterkanten-Klappensystem eine Hinterkantenklappe, eine Führungsschiene, einen Träger und eine Antriebseinrichtung aufweist. Die Antriebseinrichtung ist zum Bewegen der Hinterkantenklappe relativ zu der Flügelstruktur ausgeführt.

Die US 4,351,502 A beschreibt einen Aktuatormechanismus zum Variieren von Wölbungen bei Vorderkanten und Hinterkanten eines Flügelprofils. Dabei wird eine Kopplungsbaugruppe mit mehreren Verbindungen verwendet, um eine Rotation eines Strukturkantenbauteils zu steuern.

GB 1 496 519 A beschreibt einen Flugzeugflügel, der einen festen Abschnitt, einen beweglichen Abschnitt und ein flexibles oberes Hautelement, das sich zwischen dem festen und dem beweglichen Abschnitt erstreckt, umfasst. Der Flugzeugflügel umfasst ferner ein Hebelelement, das an einem Ende zu dem festen Abschnitt und an seinem anderen Ende zu dem beweglichen Abschnitt gelenkig gelagert ist, sowie ein Kippmittel, das den festen Abschnitt und den beweglichen Abschnitt weiter miteinander verbindet, wobei die Anordnung derart ist, dass ein Niederdrücken des Hebelelements zu einem Niederdrücken des beweglichen Abschnitts führt und bewirkt, dass das Kippmittel den beweglichen Abschnitt in Bezug auf das Hebelelement kippt. Das obere Hautelement wird gebogen, um eine im Allgemeinen glatte gekrümmte Oberfläche zwischen dem festen und dem beweglichen Flügelabschnitt bereitzustellen.

### Zusammenfassung der Erfindung

Es ist eine Aufgabe der vorliegenden Erfindung, die Anpassbarkeit eines Fahrzeugsystems an verschiedene Fahrzeugzustände zu verbessern.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Die Erfindung betrifft eine Vorrichtung mit den Merkmalen des Anspruchs 1 sowie ein Verfahren mit den Merkmalen des Anspruchs 10.

Gemäß einem Aspekt der Erfindung ist eine Vorrichtung zur beweglichen Befestigung eines Fahrzeugsystems an einer Primärstruktur eines Fahrzeugs angegeben. Die Vorrichtung weist eine Antriebseinheit auf, die dazu ausgeführt ist, eine rotatorische Bewegung eines Antriebselementes bezüglich der Primärstruktur bereitzustellen. Ferner weist die Vorrichtung ein erstes Tragelement auf, welches über eine erste Rotationsachse mit dem Antriebselement rotatorisch gekoppelt ist. Das erste Tragelement ist über eine zweite Rotationsachse rotatorisch bezüglich der Primärstruktur des Fahrzeugs gelagert. Die Vorrichtung weist ferner ein zweites Tragelement auf, welches mit dem ersten Tragelement rotatorisch gekoppelt ist, sowie ein erstes Verbindungselement, welches über eine dritte Rotationsachse rotatorisch bezüglich der Primärstruktur des Fahrzeugs gelagert ist. Dabei ist das erste Verbindungselement über eine vierte Rotationsachse mit dem zweiten Tragelement rotatorisch gekoppelt. Das zweite Tragelement ist mit dem ersten Tragelement über eine fünfte, von der vierten Rotationsachse beabstandeten Rotationsachse rotatorisch gekoppelt, sodass bei einer Bewegung des ersten Tragelements um die zweite Rotationsachse das erste Tragelement mit einer Rotationsgeschwindigkeit bewegbar ist, die sich von einer Rotationsgeschwindigkeit des zweiten Tragelements unterscheidet; wobei die vierte Rotationsachse von der fünften Rotationsachse um einen konstanten Abstand beabstandet ist; wobei die fünfte Rotationsachse von der ersten Rotationsachse beabstandet ist; wobei das erste Verbindungselement einen ersten Aktuator aufweist, der dazu ausgeführt ist, eine Länge des ersten Verbindungselements zu verändern, um somit die Rotationsgeschwindigkeit des ersten Tragelements bezüglich der Rotationsgeschwindigkeit des zweiten Tragelements anzupassen.

Mit anderen Worten wird mit der Vorrichtung ein kinematisches System bereitgestellt, bei der eine gesteuerte Rotationsbewegung durch eine Zwangswirkung der Kräfte zwischen zwei festen und zwei beweglichen Achsen entsteht. Dabei wird das erste Tragelement durch die Antriebseinheit angetrieben, wobei das erste Tragelement drehbar um eine Achse, das heißt drehbar um die zweite Rotationsachse gelagert ist, welche im Raum fest positioniert ist, beispielsweise fest in der Primärstruktur des Fahrzeugs verankert ist. Das Verbindungselement ist an einem ersten Ende ebenfalls drehbar um eine Achse, das heißt drehbar um die dritte Rotationsachse gelagert, welche im Raum fest positioniert ist, beispielsweise fest in der Primärstruktur des Fahrzeugs verankert ist. Die dritte Rotationsachse kann einen definierten Abstand zur zweiten Rotationsachse, also der Achse des ersten Tragelements, aufweisen. Das Verbindungselement ist an einem zweiten Ende drehbar um eine Achse, das heißt die vierte Rotationsachse gelagert, welche im zweiten Tragelement fest positioniert ist und einen definierten Abstand zur fünften Rotationsachse hat, welche die drehbare Kopplung des ersten Tragelements mit dem zweiten Tragelement definiert. Das zweite Tragelement ist also quasi auf dem ersten Tragelement drehbar um die fünfte Rotationsachse gelagert, welche bezüglich des ersten Tragelements fest positioniert ist.

Wird nun das erste Tragelement rotatorisch angetrieben, dreht sich das erste Tragelement um seine Achse im Raum, das heißt um die Primärstruktur. Dadurch entsteht auch eine definierte Rotation des zweiten Tragelements, welche direkt abhängig von der Geometrie der konstruierten Elemente, den Anordnungen der Drehachsen und der Positionen und der Länge des Verbindungselements ist. Dieses System kann beliebig erweitert werden. Eine beispielhafte Vorrichtung wird in der Figurenbeschreibung noch genauer erläutert werden. Mit der erfindungsgemäßen Vorrichtung ist es möglich eine bewegliche Befestigung eines Fahrzeugsystems an einer Primärstruktur eines Fahrzeugs mit einer äußerst geringen Bauhöhe bereitzustellen. Bei der Anwendung einer solchen Vorrichtung zur beweglichen Befestigung eines Klappensystems an der Primärstruktur des Fahrzeugs, beispielsweise ein Hinterkanten-Klappensystem an einem Tragflügel eines Luftfahrzeugs, kann ein unterschiedliches Ausschlagverhalten auf beiden Seiten, also in zwei Richtungen, sowie eine Optimierung der aerodynamischen Grenzschicht erreicht werden. Ferner wirkt sich die Skalierbarkeit in der Anzahl der Segmente, der Antriebsstränge und Dimensionen, wie Höhe, Breite und Länge positiv auf die Anpassbarkeit an verschiedene Fahrzeugkonfigurationen aus. Beispielsweise sind Spalten zwischen den beweglichen Teilen des Fahrzeugsystems ja nach Anforderung anpassbar und eine flexiblere Beplankung wird ermöglicht, da die Anzahl von ausschlagenden Segmenten erhöht werden kann.

Die Vorrichtung zur beweglichen Befestigung eines Fahrzeugsystems an einer Primärstruktur eines Fahrzeugs kann eine Vorrichtung zur beweglichen Befestigung eines Klappensystems an einer Primärstruktur des Fahrzeugs sein. Das Klappensystem kann dabei eine strömungsbeeinflussende Komponente sein, das heißt ein Leitwerk oder ein Ruder des Fahrzeugs. Beispielsweise ist das Klappensystem ein Ruder eines Wasserfahrzeugs, ein Seiten- oder Höhenruder eines Luftfahrzeugs oder ein Seiten- oder Höhenleitwerk eines Luftfahrzeugs. Das Klappensystem kann jedoch auch das eines Straßenfahrzeugs sein, beispielsweise in Form eines bewegbaren Spoilers etc.

Die Antriebseinheit kann ein Motor, beispielsweise ein elektrischer Motor, ein Servomotor oder ein Verbrennungsmotor sein. Die Antriebseinheit kann fest in der Primärstruktur des Fahrzeugs angeordnet oder bezüglich der Primärstruktur rotatorisch gelagert sein. Jedenfalls kann durch die Antriebseinheit eine rotatorische Bewegung eines Antriebselementes, beispielsweise eines Antriebsgestänges oder einer Antriebsstange bezüglich der Primärstruktur bereitgestellt werden. Die Antriebsstange kann dabei an einem ersten Ende fest in der Primärstruktur verankert sein und eine rotatorische Bewegung um eine in der Primärstruktur fest verankerte Rotationsachse ausführen.

Ferner weist die Vorrichtung das erste Tragelement auf, welches eine längliche Form aufweisen kann und sich entlang einer Längsachse des ersten Tragelements erstrecken kann. An einem ersten Ende des ersten Tragelements kann das erste Tragelement beweglich um die zweite Rotationsachse gelagert sein, welche fest in der Primärstruktur angeordnet sein kann. An einem zweiten Ende des ersten Tragelements kann das erste Tragelement mittels der fünften Rotationsachse rotatorisch mit dem zweiten Tragelement gekoppelt sein.

Das erste Tragelement ist ferner mittels der ersten Rotationsache mit dem Antriebselement bzw. der Antriebsstange rotatorisch gekoppelt. Die erste Rotationsachse ist insbesondere nicht fest in der Primärstruktur verankert, sondern vielmehr drehbar um die zweite, fest in der Primärstruktur verankerte Rotationsachse angeordnet, über die wiederum das erste Tragelement rotatorisch bezüglich der Primärstruktur des Fahrzeugs gelagert ist.

Die Vorrichtung weist ferner das zweite Tragelement auf, welches eine längliche Form aufweisen kann und sich entlang einer Längsachse des zweiten Tragelements erstrecken kann. An einem ersten Ende des zweiten Tragelements ist das zweite Tragelement beweglich um die fünfte Rotationsachse gelagert, welche fest in dem ersten Tragelement angeordnet sein kann. An einem zweiten Ende des zweiten Tragelements kann das zweite Tragelement mittels einer achten Rotationsachse rotatorisch mit einem dritten Tragelement gekoppelt sein.

Das erste Verbindungselement kann ebenfalls eine längliche Form aufweisen und sich entlang einer Längsachse des Verbindungselement erstrecken. An einem ersten Ende des Verbindungselements ist das Verbindungselement über die dritte Rotationsachse rotatorisch bezüglich der Primärstruktur des Fahrzeugs gelagert, wobei die dritte Rotationsachse insbesondere fest in der Primärstruktur angeordnet ist. Das erste Verbindungselement ist an einem zweiten Ende des Verbindungselements über die vierte Rotationsachse mit dem zweiten Tragelement rotatorisch gekoppelt. Die vierte Rotationsachse kann wiederum fest in dem zweiten Tragelement angeordnet sein, jedoch drehbar um die fünfte Rotationsachse gegenüber dem ersten Tragelement bewegbar sein.

Das zweite Tragelement ist nun derart mit dem ersten Tragelement über die fünfte Rotationsachse rotatorisch gekoppelt, dass bei einer Bewegung des ersten Tragelements um die zweite Rotationsachse das erste Tragelement mit einer Rotationsgeschwindigkeit bewegbar ist, die sich von einer Rotationsgeschwindigkeit des zweiten Tragelements unterscheidet.

Die Bewegung, das heißt Drehung des ersten Tragelements kann dabei durch die Antriebseinheit über das Antriebselement ausgelöst werden. Infolge der unterschiedlichen Rotationsgeschwindigkeiten des ersten und zweiten Tragelements kann erreicht werden, dass bei einer Bewegung des ersten Tragelements ein Auslenkungswinkel zwischen der Längsachse des zweiten Tragelements und einer Längsachse der Primärstruktur stets größer ist als ein Auslenkungswinkel zwischen der Längsachse des ersten Tragelements und der Längsachse der Primärstruktur. Mit anderen Worten bedeutet dies, dass eine Rotationsbewegung des zweiten Tragelements gegenüber der Primärstruktur stets größer ist als eine Rotationsbewegung des ersten Tragelements gegenüber der Primärstruktur. Dies kann beliebig fortgesetzt werden, so dass beispielsweise eine Rotationsbewegung eines dritten Tragelements gegenüber der Primärstruktur stets größer ist als die Rotationsbewegung des zweiten Tragelements gegenüber der Primärstruktur und auch größer ist als die Rotationsbewegung des ersten Tragelements gegenüber der Primärstruktur. Dieser Zusammenhang wird in der Figurenbeschreibung noch weiter verdeutlicht.

Die Tragelemente sowie die Verbindungselemente, aber auch das Antriebselement können aus einem starren oder einem flexiblen Material gebildet sein. Ferner können für diese Komponenten der Vorrichtung Materialien wie Aluminium, Stahl, Kunststoff, kohlenstofffaserverstärkter Kunststoff, glasfaserverstärkter Kunststoff oder eine Kombination dieser Materialien verwendet werden.

Gemäß einer Ausführungsform der Erfindung ist das Fahrzeugsystem ein Luftfahrzeugsystem, welches ein Hinterkanten-Klappensystem eines Tragflügels eines Luftfahrzeugs aufweist.

Die Vorrichtung bewirkt eine unterschiedliche, für den jeweiligen Anwendungsfall konkret abgestimmte Auslenkung der einzelnen Tragelemente zueinander. Ferner kann ein unterschiedliches Ausschlagverhalten von Klappensegmenten des Hinterkanten-Klappensystems auf beiden Seiten, also in zwei Richtungen, sowie eine Optimierung der aerodynamischen Grenzschicht erreicht werden.

Gemäß einer Ausführungsform der Erfindung weist die Vorrichtung ferner ein erstes Hinterkanten-Klappensegment auf, welches an dem ersten Tragelement fixiert bzw. befestigt und zusammen mit dem ersten Tragelement bewegbar ist. Alternativ oder zusätzlich weist die Vorrichtung ein zweites Hinterkanten-Klappensegment auf, welches an dem zweiten Tragelement fixiert bzw. befestigt und zusammen mit dem zweiten Tragelement bewegbar ist.

Es sei angemerkt, dass die einzelnen Segmente jeweils auch ein integrales Teil der Tragelemente sein können. Die Hinterkanten-Klappensegmente können als Flächensegmente ausgebildet sein, insbesondere in Form von aerodynamischen Oberflächensegmenten. Durch die erfindungsgemäße Vorrichtung kann eine beliebige Anzahl solcher Segmente vorgesehen werden, wobei Höhe, Breite und Länge an verschiedene Fahrzeugkonfigurationen angepasst werden können. Die einzelnen Segmente können auch flexibel sein, so dass eine Ausrichtung der Hinterkanten-Klappensegmente durch sogenanntes "morphing" einstellbar ist. Durch die erfindungsgemäße Vorrichtung können ferner Spalten zwischen den beweglichen Teilen des Fahrzeugsystems je nach Anforderung angepasst werden und eine flexiblere Beplankung wird ermöglicht, indem die Anzahl von ausschlagenden Segmenten erhöht wird. Es kann vorgesehen sein, dass die einzelnen Hinterkanten-Klappensegmente zusammen mit ihren zugehörigen Tragelementen ausgelenkt bzw. rotiert werden.

Gemäß einer Ausführungsform der Erfindung weist die Antriebseinheit eine Kolbenmaschine auf, die dazu ausgeführt ist, die rotatorische Bewegung des Antriebselementes bezüglich der Primärstruktur zu bewirken.

Dabei kann die Kolbenmaschine durch eine Kolbenbewegung eine translatorische Bewegung des Antriebselements, das heißt der Antriebsstange auslösen, was wiederum aufgrund der rotatorischen Lagerung des Antriebselements in der Primärstruktur und der rotatorischen Kopplung mit dem ersten Tragelement zu einer rotatorischen Bewegung des Antriebselements selbst führt.

Gemäß der Erfindung weist das Verbindungselement einen ersten Aktuator auf, der dazu ausgeführt ist, die Länge des ersten Verbindungselements zu verändern, um somit die Rotationsgeschwindigkeit des ersten Tragelements bezüglich der Rotationsgeschwindigkeit des zweiten Tragelements anzupassen.

Das bedeutet, dass die Rotation bzw. Rotationsgeschwindigkeit des zweiten Tragelements nicht allein durch die Anordnung und Geometrie der einzelnen Komponenten der Vorrichtung bestimmt werden kann, sondern eine aktive Beeinflussung, zum Beispiel durch Änderung der Längen des ersten und/oder zweiten Verbindungselementes oder aber auch durch Änderung der Längen des ersten und/oder zweiten Tragelementes erfolgen kann. Insbesondere kann durch den ersten Aktuator eine Längeneinstellung des ersten Verbindungselementes erfolgen. Dabei kann durch den ersten Aktuator auch eine Längenänderungsgeschwindigkeit des ersten Verbindungselements eingestellt werden. Dadurch kann die Rotationsgeschwindigkeit des ersten Tragelements gegenüber der Rotationsgeschwindigkeit des zweiten Tragelements durch einen weiteren Einstellparameter exakt variiert, eingestellt und angepasst werden. Ebenso können das erste und zweite Tragelement auch jeweils Aktuatoren aufweisen, welche die Längen, insbesondere die Längenänderungsgeschwindigkeiten der Tragelemente exakt variieren, einstellen und anpassen können.

Gemäß einer Ausführungsform der Erfindung weist die Vorrichtung ein drittes Tragelement auf, welches mit dem zweiten Tragelement rotatorisch gekoppelt ist. Ferner weist die Vorrichtung ein zweites Verbindungselement auf, welches über eine sechste Rotationsachse rotatorisch bezüglich dem ersten Tragelement gelagert ist. Das zweite Verbindungselement ist über eine siebente Rotationsachse mit dem dritten Tragelement rotatorisch gekoppelt. Das dritte Tragelement ist mit dem zweiten Tragelement über eine achte, von der siebenten Rotationsachse beabstandeten Rotationsachse rotatorisch gekoppelt, sodass bei einer Bewegung des zweiten Tragelements um die fünfte Rotationsachse das zweite Tragelement mit einer Rotationsgeschwindigkeit bewegbar ist, die sich von einer Rotationsgeschwindigkeit des dritten Tragelements unterscheidet.

Die erfindungsgemäße Vorrichtung kann somit mit beliebig vielen Tragelementen fortgesetzt werden, wobei die Anordnung der weiteren Elemente in struktureller Hinsicht stets wie bei der Kopplung zwischen dem zweiten und dem dritten Tragelement erfolgt.

Gemäß einer Ausführungsform der Erfindung weist die Vorrichtung ein drittes Hinterkanten-Klappensegment auf, welches an dem dritten Tragelement fixiert bzw. befestigt und zusammen mit dem dritten Tragelement bewegbar ist.

Insbesondere kann eine beliebige Anzahl von mit den Tragelementen verbundenen Hinterkanten-Klappensegmenten vorgesehen werden, was die Flexibilität und Anpassbarkeit des Hinterkanten-Klappensystems weiter erhöht.

Gemäß einer Ausführungsform der Erfindung weist das erste Tragelement eine erste Längsausdehnungsrichtung auf, entlang welcher die zweite Rotationsachse von der fünften Rotationsachse beabstandet ist. Alternativ oder zusätzlich weist das zweite Tragelement eine zweite Längsausdehnungsrichtung auf, entlang welcher die fünfte Rotationsachse von der achten Rotationsachse beabstandet ist.

Durch die unterschiedliche Rotationsgeschwindigkeit des ersten Tragelements und des zweiten Tragelements kann der Winkel zwischen der ersten Längsausdehnungsrichtung und der zweiten Längsausdehnungsrichtung und damit auch zwischen den an den ersten und zweiten Tragelementen fixierten ersten und zweiten Hinterkanten-Klappensegmenten verändert werden. Die Rotationsgeschwindigkeiten der einzelnen Tragelemente kann ferner durch jeweils vorgesehene Aktuatoren beeinflusst werden, welche eine Längenänderung der Tragelemente in den jeweiligen Längsausdehnungsrichtungen bewirken.

Gemäß einer Ausführungsform der Erfindung weist das zweite Verbindungselement einen zweiten Aktuator auf, der dazu ausgeführt ist, die Länge des zweiten Verbindungselements zu verändern, um somit die Rotationsgeschwindigkeit des zweiten Tragelements bezüglich der Rotationsgeschwindigkeit des dritten Tragelements anzupassen.

Das bedeutet, dass die Rotation bzw. Rotationsgeschwindigkeit des dritten Tragelements nicht allein durch die Anordnung und Geometrie der einzelnen Komponenten der Vorrichtung bestimmt werden kann, sondern eine aktive Beeinflussung zum Beispiel auch durch Änderung der Länge des zweiten Verbindungselementes erfolgen kann. Insbesondere kann durch den zweiten Aktuator eine Längeneinstellung des zweiten Verbindungselementes erfolgen. Dabei kann durch den zweiten Aktuator auch eine Längenänderungsgeschwindigkeit eingestellt werden. Dadurch kann die Rotationsgeschwindigkeit des dritten Tragelements gegenüber der Rotationsgeschwindigkeit des ersten und zweiten Tragelements durch einen weiteren Einstellparameter exakt variiert, eingestellt und angepasst werden.

Gemäß einem Aspekt der Erfindung ist die Verwendung der zuvor und im Folgenden beschriebenen, erfindungsgemäßen Vorrichtung zur Befestigung eines Hinterkanten-Klappensystems eines Tragflügels eines Luftfahrzeugs an einer Primärstruktur des Luftfahrzeugs angegeben.

Gemäß einem weiteren Aspekt der Erfindung ist ein Verfahren zum beweglichen Befestigen eines Fahrzeugsystems an einer Primärstruktur eines Fahrzeugs angegeben. In einem Schritt des Verfahrens erfolgt ein Bereitstellen einer rotatorischen Befestigung eines Antriebselementes bezüglich der Primärstruktur des Fahrzeugs. In einem weiteren Schritt erfolgt ein rotatorisches Koppeln eines ersten Tragelements über eine erste Rotationsachse mit dem Antriebselement. In einem weiteren Schritt erfolgt ein rotatorisches Lagern des ersten Tragelements bezüglich der Primärstruktur des Fahrzeugs über eine zweite Rotationsachse. In einem weiteren Schritt erfolgt ein rotatorisches Koppeln eines zweiten Tragelements mit dem ersten Tragelement und in einem weiteren Schritt erfolgt ein rotatorisches Lagern eines ersten Verbindungselements bezüglich der Primärstruktur des Fahrzeugs über eine dritte Rotationsachse. In einem weiteren Schritt erfolgt ein rotatorisches Koppeln des ersten Verbindungselements über eine vierte Rotationsachse mit dem zweiten Tragelement. In einem weiteren Schritt erfolgt ein rotatorisches Koppeln des zweiten Tragelements mit dem ersten Tragelement über eine fünfte, von der vierten Rotationsachse beabstandeten Rotationsachse, sodass bei einer Bewegung des ersten Tragelements um die zweite Rotationsachse das erste Tragelement mit einer Rotationsgeschwindigkeit bewegbar ist, die sich von einer Rotationsgeschwindigkeit des zweiten Tragelements unterscheidet.

### Kurze Beschreibung der Figuren

- Fig. 1: zeigt eine Seitenansicht einer Vorrichtung zur beweglichen Befestigung eines Hinterkanten-Klappensystems an einer Primärstruktur eines Luftfahrzeugs gemäß einem Ausführungsbeispiel der Erfindung.
- Fig. 2: zeigt eine perspektivische Ansicht einer Vorrichtung zur beweglichen Befestigung eines Hinterkanten-Klappensystems an einer Primärstruktur eines Luftfahrzeugs gemäß einem Ausführungsbeispiel der Erfindung.
- Fig. 3: zeigt eine perspektivische Ansicht einer Vorrichtung zur beweglichen Befestigung eines Fahrzeugsystems an einer Primärstruktur gemäß einem Ausführungsbeispiel der Erfindung.
- Fig. 4A: zeigt eine Seitenansicht der in den Fig. 1 und 2 dargestellten Vorrichtung in einem in eine erste Richtung ausgelenkten Zustand des Hinterkanten-Klappensystems gemäß einem Ausführungsbeispiel der Erfindung.
- Fig. 4B: zeigt eine Seitenansicht der in den Fig. 1 und 2 dargestellten Vorrichtung in einem nicht ausgelenkten Zustand des Hinterkanten-Klappensystems gemäß einem Ausführungsbeispiel der Erfindung.
- Fig. 4C: zeigt eine Seitenansicht der in den Fig. 1 und 2 dargestellten Vorrichtung in einem in eine zweite Richtung ausgelenkten Zustand des Hinterkanten-Klappensystems gemäß einem Ausführungsbeispiel der Erfindung.
- Fig. 5: zeigt eine perspektivische Ansicht eines Ausschnittes aus einem Tragflügel eines Luftfahrzeugs mit drei Vorrichtungen zur beweglichen Befestigung eines Hinterkanten-Klappensystems an dem Tragflügel gemäß einem Ausführungsbeispiel der Erfindung.
- Fig. 6: zeigt ein Luftfahrzeug mit einer Vorrichtung zur beweglichen Befestigung eines Hinterkanten-Klappensystems an einer Primärstruktur des Luftfahrzeugs gemäß einem Ausführungsbeispiel der Erfindung.
- Fig. 7: zeigt ein Flussdiagramm eines Verfahrens zum beweglichen Befestigen eines Fahrzeugsystems an einer Primärstruktur eines Fahrzeugs gemäß einem Ausführungsbeispiel der Erfindung.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

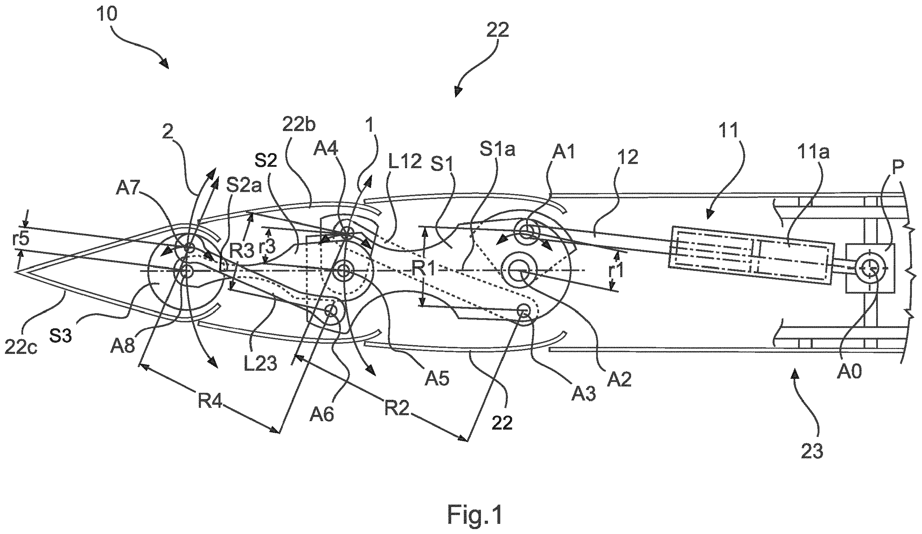

Fig. 1 zeigt eine Seitenansicht einer Vorrichtung 10 zur beweglichen Befestigung eines Hinterkanten-Klappensystems 22 an einer Primärstruktur P eines Luftfahrzeugs. Die Vorrichtung 10 weist eine Antriebseinheit 11 auf, die dazu ausgeführt ist, eine rotatorische Bewegung eines Antriebselementes 12 bezüglich der Primärstruktur P bereitzustellen. Die Vorrichtung 10 weist ferner ein erstes Tragelement S1 auf, welches über eine erste Rotationsachse A1 mit dem Antriebselement 12 rotatorisch gekoppelt ist. Das erste Tragelement S1 ist über eine zweite Rotationsachse A2 rotatorisch bezüglich der Primärstruktur P des Luftfahrzeugs gelagert. Die Vorrichtung 10 weist ferner ein zweites Tragelement S2 auf, welches mit dem ersten Tragelement S1 rotatorisch gekoppelt ist, sowie ein erstes Verbindungselement L12, welches über eine dritte Rotationsachse A3 rotatorisch bezüglich der Primärstruktur P gelagert ist. Das erste Verbindungselement L12 ist in Fig. 1 teilweise verdeckt dargestellt, wobei die verdeckten Teile des Verbindungselements L12 durch gestrichelte Linien dargestellt sind. Generell können verdeckte Teile in den Figuren durch gestrichelte Linien dargestellt sein. Das erste Verbindungselement L12 ist über eine vierte Rotationsachse A4 mit dem zweiten Tragelement S2 rotatorisch gekoppelt. Das zweite Tragelement S2 ist mit dem ersten Tragelement S1 über eine von der vierten Rotationsachse A4 beabstandeten, fünften Rotationsachse A5 rotatorisch gekoppelt, sodass bei einer Bewegung des ersten Tragelements S1 um die zweite Rotationsachse A2 das erste Tragelement S1 mit einer Rotationsgeschwindigkeit bewegbar ist, die sich von einer Rotationsgeschwindigkeit des zweiten Tragelements S2 unterscheidet.

Die Vorrichtung 10 weist ferner ein drittes Tragelement S3 auf, welches mit dem zweiten Tragelement S2 rotatorisch gekoppelt ist, sowie ein zweites Verbindungselement L23, welches über eine sechste Rotationsachse A6 rotatorisch bezüglich dem ersten Tragelement S1 gelagert ist. Das zweite Verbindungselement L23 ist über eine siebente Rotationsachse A7 mit dem dritten Tragelement S3 rotatorisch gekoppelt. Das dritte Tragelement S3 ist mit dem zweiten Tragelement S2 über eine von der siebenten Rotationsachse A7 beabstandeten, achten Rotationsachse A8 rotatorisch gekoppelt, sodass bei einer Bewegung des zweiten Tragelements S2 um die fünfte Rotationsachse A5 das zweite Tragelement S2 mit einer Rotationsgeschwindigkeit bewegbar ist, die sich von einer Rotationsgeschwindigkeit des dritten Tragelements S3 unterscheidet.

Die Antriebseinheit 11, welche in der in Fig. 1 dargestellten Konfiguration eine Kolbenmaschine 11a aufweist, ist bezüglich der Primärstruktur P des Fahrzeugs rotatorisch gelagert. Die Primärstruktur P kann durch Verstärkungselemente wie Balkenelemente, Rippen, Stringer, Spanten und Verkleidungs- oder Außenhautelemente des Luftfahrzeugs gebildet sein. Die Primärstruktur P ist in dem in Fig. 1 dargestellten Fall durch eine Tragflügelstruktur bzw. einen Tragflügel 23 des Luftfahrzeugs gebildet. Die Antriebseinheit 11 stellt eine rotatorische Bewegung eines Antriebselementes 12, insbesondere einer Antriebsstange, bezüglich der Primärstruktur P bereit. Das Antriebselement 12 ist dabei an einem ersten Ende über einen Aufhängungspunkt fest in der Primärstruktur P verankert und führt eine rotatorische Bewegung um eine in der Primärstruktur P fest verankerte Rotationsachse A0 aus.

Ferner weist die Vorrichtung 10 das erste Tragelement S1 auf, welches sich entlang einer Längsachse S1a des ersten Tragelements S1 erstreckt. An einem ersten Ende des ersten Tragelements S1 ist das erste Tragelement S1 beweglich um die zweite Rotationsachse A2 gelagert, wobei die zweite Rotationsachse A2 fest in der Primärstruktur P verankert ist, auch wenn dies in der Fig. 1 nicht dargestellt sein mag. An einem zweiten Ende des ersten Tragelements S1 ist das erste Tragelement mittels der fünften Rotationsachse A5 rotatorisch mit dem zweiten Tragelement S2 gekoppelt.

Das erste Tragelement S1 ist ferner mittels der ersten Rotationsache A1 mit dem Antriebselement 12 bzw. der Antriebsstange rotatorisch gekoppelt. Die erste Rotationsachse A1 ist dabei nicht fest in der Primärstruktur P verankert, sondern drehbar um die zweite Rotationsachse A2 angeordnet, die wiederum fest in der Primärstruktur P verankert ist. Um die zweite Rotationsachse A2 ist das erste Tragelement S1 somit rotatorisch bezüglich der Primärstruktur P gelagert. Die erste Rotationsachse A1 ist von der zweiten Rotationsachse A2 um den konstanten Abstand r1 beabstandet. Die erste Rotationsachse A1 ist von der dritten Rotationsachse A3 um den variablen Abstand R1 beabstandet.

Das zweite Tragelement S2 erstreckt sich entlang einer Längsachse S2a des zweiten Tragelements S2. An einem ersten Ende des zweiten Tragelements S2 ist das zweite Tragelement S2 beweglich um die fünfte Rotationsachse A5 gelagert, welche fest in dem ersten Tragelement S1 angeordnet ist. An einem zweiten Ende des zweiten Tragelements S2 ist das zweite Tragelement S2 über die achte Rotationsachse A8 rotatorisch mit dem dritten Tragelement S3 gekoppelt.

An einem ersten Ende des ersten Verbindungselements L12 ist das erste Verbindungselement L12 über die dritte Rotationsachse A3 rotatorisch bezüglich der Primärstruktur P des Fahrzeugs gelagert, wobei die dritte Rotationsachse A3 insbesondere fest in der Primärstruktur P angeordnet ist. Das erste Verbindungselement L12 ist an einem zweiten Ende des ersten Verbindungselements L12 über die vierte Rotationsachse A4 mit dem zweiten Tragelement S2 rotatorisch gekoppelt. Die vierte Rotationsachse A4 ist wiederum fest in dem zweiten Tragelement S2 angeordnet, jedoch ist die vierte Rotationsachse A4 drehbar um die fünfte Rotationsachse A5 gegenüber dem ersten Tragelement S1 angeordnet. Die vierte Rotationsachse A4 ist von der fünften Rotationsachse A5 um den konstanten Abstand r3 beabstandet. Die vierte Rotationsachse A4 ist gegenüber der sechsten Rotationsachse A6 um den variablen Abstand R3 beabstandet. Das erste Verbindungselement L12 beabstandet die dritte Rotationsachse A3 von der vierten Rotationsachse A4 um den Abstand R2, wobei der Abstand R2 durch einen ersten, nicht dargestellten Aktuator einstellbar sein kann.

Das zweite Tragelement S2 ist nun derart mit dem ersten Tragelement S1 über die fünfte Rotationsachse A5 rotatorisch gekoppelt, dass bei einer Bewegung des ersten Tragelements S1 um die zweite Rotationsachse A2 (Rotationsrichtung ist in Fig. 1 durch Pfeile dargestellt) das erste Tragelement S1 mit einer Rotationsgeschwindigkeit bewegbar ist, die sich von einer Rotationsgeschwindigkeit des zweiten Tragelements S2 unterscheidet. Die Rotationsrichtungen des zweiten Tragelements S2 um die fünfte Rotationsachse A5 sowie die Rotationsrichtungen des dritten Tragelements S3 um die achte Rotationsachse A8 sind in Fig. 1 ebenfalls durch entsprechende Pfeile gekennzeichnet. Ferner sind die Bewegungs- bzw. Rotationsrichtungen der fünften Rotationsachse A5 bei einer Drehung des ersten Tragelements S1 um die zweite Rotationsachse A2 mittels der Pfeile 1 dargestellt. Ferner sind die Bewegungs- bzw. Rotationsrichtungen der achten Rotationsachse A8 bei einer Drehung des zweiten Tragelements S2 um die fünfte Rotationsachse A5 mittels der Pfeile 2 dargestellt.

An einem ersten Ende des zweiten Verbindungselements L23 ist das zweite Verbindungselement L23 über die sechste Rotationsachse A6 rotatorisch bezüglich des ersten Tragelements S1 gelagert, wobei die sechste Rotationsachse A6 fest in dem ersten Tragelement S1 angeordnet ist. Das zweite Verbindungselement L23 ist an einem zweiten Ende des zweiten Verbindungselements L23 über die siebente Rotationsachse A7 mit dem dritten Tragelement S3 rotatorisch gekoppelt. Die siebente Rotationsachse A7 ist wiederum fest in dem dritten Tragelement S3 angeordnet, jedoch ist die siebente Rotationsachse A7 drehbar um die achte Rotationsachse A8 gegenüber dem zweiten Tragelement S2 angeordnet. Die siebente Rotationsachse A7 ist von der achten Rotationsachse A8 um den konstanten Abstand r5 beabstandet. Das zweite Verbindungselement L23 beabstandet die sechste Rotationsachse A6 von der siebenten Rotationsachse A7 um den Abstand R4, wobei der Abstand R4 durch einen zweiten nicht dargestellten Aktuator einstellbar sein kann.

Das dritte Tragelement S3 ist in dem in Fig. 1 dargestellten Fall das letzte Glied in der kinematischen Kette. Es sei jedoch verstanden, dass das Prinzip dieser kinematischen Kette mit beliebig vielen Tragelementen und Verbindungselementen fortgesetzt werden kann.

Durch gemeinsame oder ausgewählte Einstellung der Abstände r1, r3, r5, R1, R2, R3 und R4 können die einzelnen Rotationsgeschwindigkeiten der Tragelemente S1, S2 und S3 gezielt eingestellt werden, so dass die an den Tragelementen S1, S2, S3 fixierten Hinterkanten-Klappensegmente 22a, 22b, 22c mit gezielt abgestimmten Rotationsgeschwindigkeiten relativ zueinander bewegt werden können.

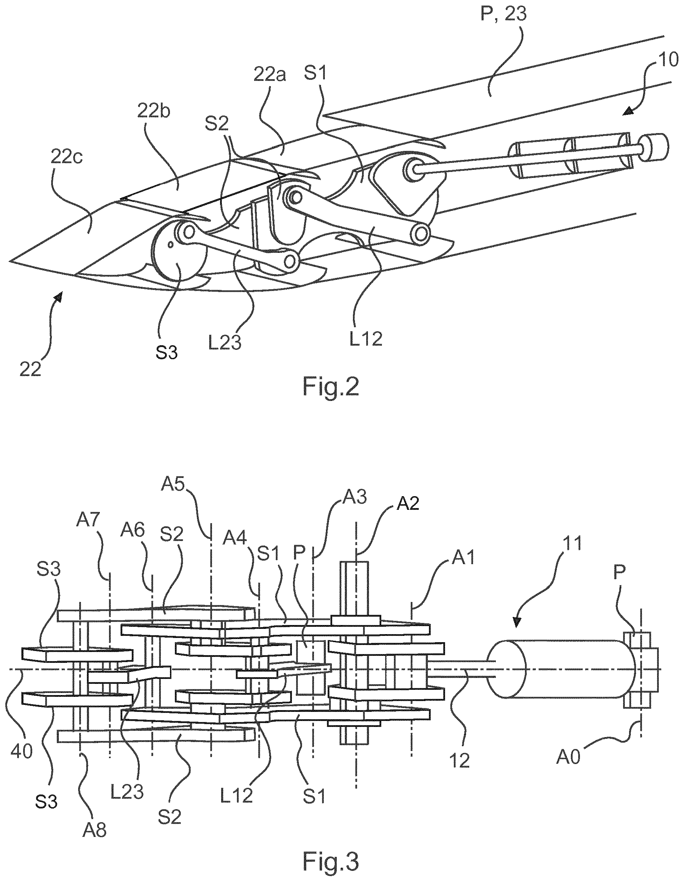

Fig. 2 zeigt eine perspektivische Ansicht der Vorrichtung 10 zur beweglichen Befestigung eines Hinterkanten-Klappensystems 22 an einer Primärstruktur P, welche durch eine Flügelstruktur bzw. einen Tragflügel 23 des Luftfahrzeugs 24 gebildet wird. Dabei ist die in der Fig. 1 dargestellte Vorrichtung 10 mit dem ersten Tragelement S1, dem drehbar am ersten Tragelement S1 befestigten zweiten Tragelement S2 und dem drehbar am zweiten Tragelement S2 befestigten dritten Tragelement S3 vorgesehen, wobei von den Tragelementen S1, S2, S3 lediglich das erste Tragelement S1 an der Primärstruktur P befestigt ist. Das erste Tragelement S1 weist ein daran befestigtes erstes Hinterkanten-Klappensegment 22a auf. Das zweite Tragelement S2 weist ein daran befestigtes zweites Hinterkanten-Klappensegment 22b auf. Das dritte Tragelement S3 weist ein daran befestigtes drittes Hinterkanten-Klappensegment 22c auf. Fig. 2 zeigt auch die Verbindungselemente L12, L23.

Fig. 3 zeigt eine perspektivische Ansicht der Vorrichtung 10 aus den Figuren 1 und 2 zur beweglichen Befestigung eines nicht dargestellten Fahrzeugsystems 20 an einer Primärstruktur P. Dabei sind nochmals sämtliche Rotationsachsen A0, A1, A2, A3, A4, A5, A6, A7, A8 sowie sämtliche Tragelemente S1, S2, S3 dargestellt. Ferner sind auch das erste Verbindungselement L12 und das zweite Verbindungselement L23 dargestellt. Erkennbar ist die symmetrische Ausgestaltung der Vorrichtung, bei der das erste Tragelement S1, das zweite Tragelement S2 und das dritte Tragelement S3 jeweils durch zwei Teiltragelemente gebildet werden, die sich bezüglich einer durch die Symmetrielinie 40 hindurchgehende gehende Symmetrieebene gegenüberliegen. Die Funktionsweise entspricht der bereits mit Bezug zur Fig. 1 beschriebenen Funktionsweise.

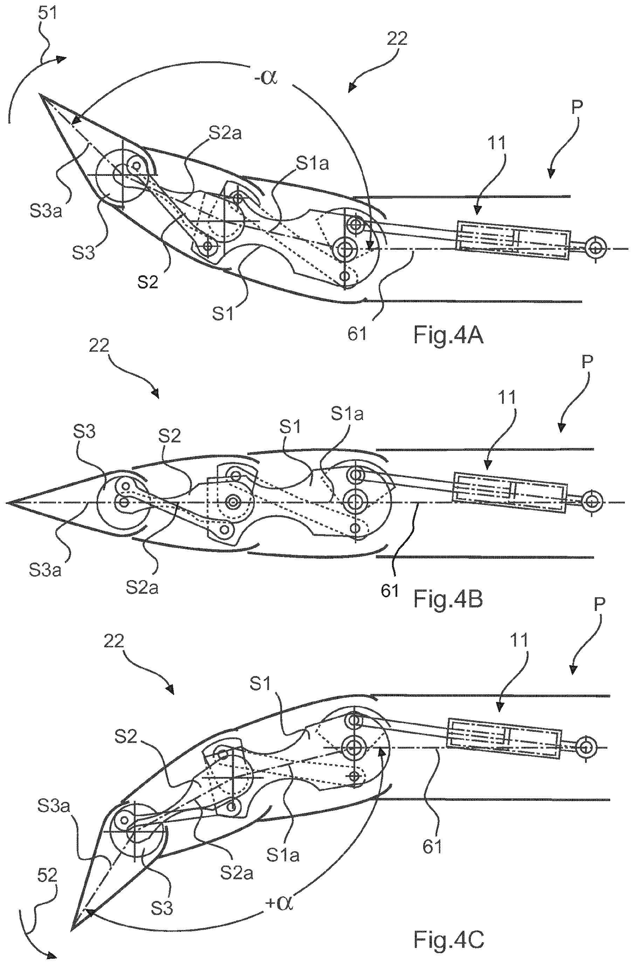

Fig. 4A zeigt eine Seitenansicht der in den Fig. 1 und 2 dargestellten Vorrichtung 10 in einem in eine erste Richtung 51 ausgelenkten Zustand des Hinterkanten-Klappensystems 22, bei dem die relative Drehung der jeweiligen Tragelemente S1, S2, S3 derart zueinander erfolgt, das ein Auslenkwinkel -α zwischen einer Längsausdehnungsrichtung 61 des Primärstrukturelements P und einer Längsausdehnungsrichtung S3a des dritten Tragelements S3 eingestellt ist. Die Längsausdehnungsrichtungen S1a und S2a des ersten Tragelements S1 bzw. des zweiten Tragelements S2 sind ebenfalls dargestellt.

Fig. 4B zeigt eine Seitenansicht der in den Fig. 1 und 2 dargestellten Vorrichtung 10 in einem nicht ausgelenkten Zustand des Hinterkanten-Klappensystems 22, bei dem die Längsausdehnungsrichtung 61 des Primärstrukturelements P, die Längsausdehnungsrichtung S1a des ersten Tragelements S1, die Längsausdehnungsrichtung S2a des zweiten Tragelements S2 und die Längsausdehnungsrichtung S3a des dritten Tragelements S3 parallel zueinander ausgerichtet sind, insbesondere in einer Linie liegen.

Fig. 4C zeigt eine Seitenansicht der in den Fig. 1 und 2 dargestellten Vorrichtung 10 in einem in eine zweite Richtung 52 ausgelenkten Zustand des Hinterkanten-Klappensystems 22, bei dem die relative Drehung der jeweiligen Tragelemente S1, S2, S3 derart zueinander erfolgt, das ein Auslenkwinkel +α zwischen einer Längsausdehnungsrichtung 61 des Primärstrukturelements P und einer Längsausdehnungsrichtung S3a des dritten Tragelements S3 eingestellt ist. Die Längsausdehnungsrichtungen S1a und S2a des ersten Tragelements S1 bzw. des zweiten Tragelements S2 sind ebenfalls dargestellt.

Wie aus Fig. 4C ersichtlich, wird infolge der durch die kinematische Kette hervorgerufenen unterschiedlichen Rotationsgeschwindigkeiten des ersten Tragelements S1 und des zweiten Tragelements S2 erreicht, dass bei einer Bewegung des ersten Tragelements S1 ein Auslenkungswinkel zwischen der Längsachse S2a des zweiten Tragelements S2 und einer Längsachse 61 der Primärstruktur P stets größer ist als ein Auslenkungswinkel zwischen der Längsachse S1a des ersten Tragelements S1 und der Längsachse 61 der Primärstruktur P.

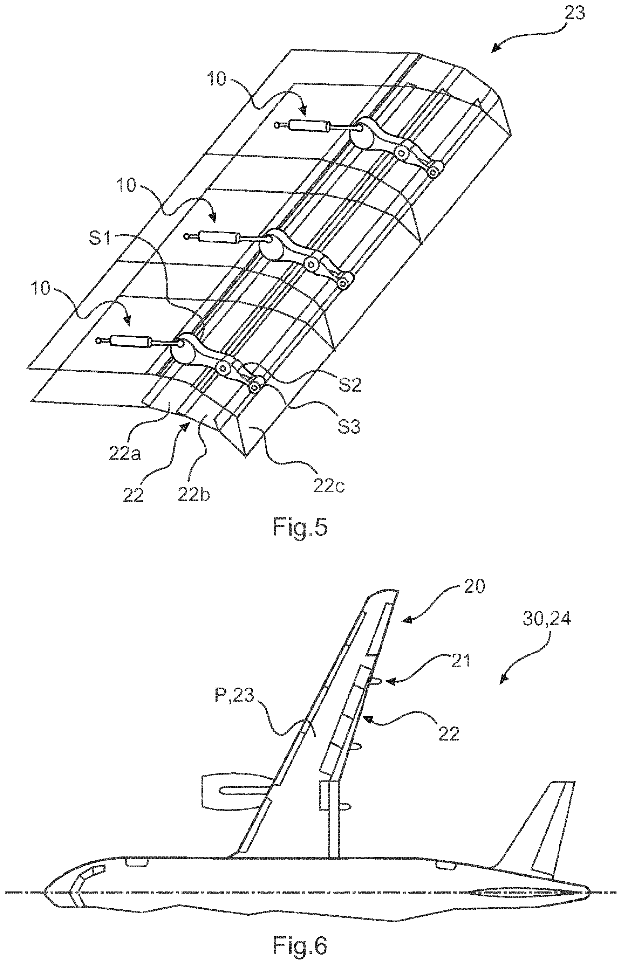

Fig. 5 zeigt eine perspektivische Ansicht eines Ausschnittes aus einem Tragflügel 23 eines nicht dargestellten Luftfahrzeugs mit drei Vorrichtungen 10 zur beweglichen Befestigung eines Hinterkanten-Klappensystems 22 an dem Tragflügel 23. Zu erkennen ist, dass die einzelnen an den jeweiligen Tragelementen S1, S2, S3 befestigten Hinterkanten-Klappensegmente 22a, 22b, 22c zusammen eine aerodynamische Gesamtoberfläche bilden, welche zur Strömungsbeeinflussung auf dem Tragflügel 23 verwendet wird.

Fig. 6 zeigt ein Fahrzeug 30, insbesondere ein Luftfahrzeug 24 mit einer Vorrichtung 10 zur beweglichen Befestigung eines Fahrzeugsystems 20, insbesondere eines Luftfahrzeugsystems 21, insbesondere eines Hinterkanten-Klappensystems 22 an einer Primärstruktur P des Luftfahrzeugs 24. Dabei ist das in Fig. 5 gezeigte Hinterkanten-Klappensystem 22 an einer Hinterkante des Tragflügels 23 der Fig. 6 befestigt.

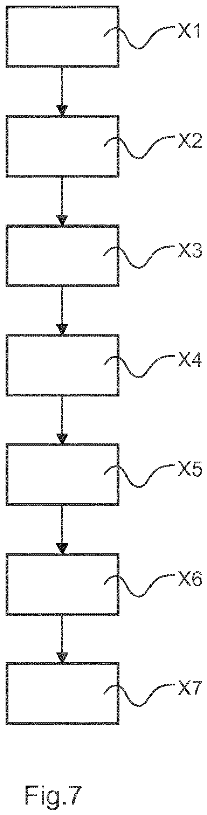

Fig. 7 zeigt ein Flussdiagramm eines Verfahrens zum beweglichen Befestigen eines Fahrzeugsystems 20 an einer Primärstruktur P eines Fahrzeugs 30. In einem Schritt X1 des Verfahrens erfolgt ein Bereitstellen einer rotatorischen Befestigung eines Antriebselementes 11 bezüglich der Primärstruktur P des Fahrzeugs 30. In einem weiteren Schritt X2 erfolgt ein rotatorisches Koppeln eines ersten Tragelements S1 über eine erste Rotationsachse A1 mit dem Antriebselement 11. In einem weiteren Schritt X3 erfolgt ein rotatorisches Lagern des ersten Tragelements S1 bezüglich der Primärstruktur P des Fahrzeugs 30 über eine zweite Rotationsachse A2. In einem weiteren Schritt X4 erfolgt ein rotatorisches Koppeln eines zweiten Tragelements S2 mit dem ersten Tragelement S1 und in einem weiteren Schritt X5 erfolgt ein rotatorisches Lagern eines ersten Verbindungselements L12 bezüglich der Primärstruktur P des Fahrzeugs 30 über eine dritte Rotationsachse A3. In einem weiteren Schritt X6 erfolgt ein rotatorisches Koppeln des ersten Verbindungselements L12 über eine vierte Rotationsachse A4 mit dem zweiten Tragelement S2. In einem weiteren Schritt X7 erfolgt ein rotatorisches Koppeln des zweiten Tragelements S2 mit dem ersten Tragelement S1 über eine fünfte, von der vierten Rotationsachse A4 beabstandeten Rotationsachse A5, sodass bei einer Bewegung des ersten Tragelements S1 um die zweite Rotationsachse A2 das erste Tragelement S1 mit einer Rotationsgeschwindigkeit bewegbar ist, die sich von einer Rotationsgeschwindigkeit des zweiten Tragelements S2 unterscheidet.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Vorrichtung (10) zur beweglichen Befestigung eines Fahrzeugsystems (20) an einer Primärstruktur (P) eines Fahrzeugs (30), aufweisend:
eine Antriebseinheit (11), die dazu ausgeführt ist, eine rotatorische Bewegung eines Antriebselementes (12) bezüglich der Primärstruktur (P) bereitzustellen;
ein erstes Tragelement (S1), welches über eine erste Rotationsachse (A1) mit dem Antriebselement (12) rotatorisch gekoppelt ist;
wobei das erste Tragelement (S1) über eine zweite Rotationsachse (A2) rotatorisch bezüglich der Primärstruktur (P) des Fahrzeugs (30) gelagert ist;
ein zweites Tragelement (S2), welches mit dem ersten Tragelement (S1) rotatorisch gekoppelt ist;
ein erstes Verbindungselement (L12), welches über eine dritte Rotationsachse (A3) rotatorisch bezüglich der Primärstruktur (P) des Fahrzeugs (30) gelagert ist;
wobei die erste Rotationsachse (A1) von der zweiten Rotationsachse (A2) um einen konstanten Abstand (r1) beabstandet ist;
wobei das erste Verbindungselement (L12) über eine vierte Rotationsachse (A4) mit dem zweiten Tragelement (S2) rotatorisch gekoppelt ist;
wobei das zweite Tragelement (S2) mit dem ersten Tragelement (S1) über eine fünfte, von der vierten Rotationsachse (A4) beabstandeten Rotationsachse (A5) rotatorisch gekoppelt ist, sodass bei einer Bewegung des ersten Tragelements (S1) um die zweite Rotationsachse (A2) das erste Tragelement (S1) mit einer Rotationsgeschwindigkeit bewegbar ist, die sich von einer Rotationsgeschwindigkeit des zweiten Tragelements (S2) unterscheidet;
wobei die vierte Rotationsachse (A4) von der fünften Rotationsachse (A5) um einen konstanten Abstand (r3) beabstandet ist;
wobei die fünfte Rotationsachse (A5) von der ersten Rotationsachse (A1) beabstandet ist; **dadurch gekennzeichnet, dass**
das erste Verbindungselement (L12) einen ersten Aktuator aufweist, der dazu ausgeführt ist, eine Länge (R2) des ersten Verbindungselements (L12) zu verändern, um somit die Rotationsgeschwindigkeit des ersten Tragelements (S1) bezüglich der Rotationsgeschwindigkeit des zweiten Tragelements (S2) anzupassen.

2. Vorrichtung (10) nach Anspruch 1,
wobei das Fahrzeugsystem (20) ein Luftfahrzeugsystem (21) ist, welches ein Hinterkanten-Klappensystem (22) eines Tragflügels (23) eines Luftfahrzeugs (24) aufweist.

3. Vorrichtung (10) nach einem der vorhergehenden Ansprüche, aufweisend
ein erstes Hinterkanten-Klappensegment (22a), welches an dem ersten Tragelement (S1) fixiert und zusammen mit dem ersten Tragelement (S1) bewegbar ist; und
ein zweites Hinterkanten-Klappensegment (22b), welches an dem zweiten Tragelement (S2) fixiert und zusammen mit dem zweiten Tragelement (S2) bewegbar ist.

4. Vorrichtung (10) nach einem der vorhergehenden Ansprüche,
wobei die Antriebseinheit (11) eine Kolbenmaschine (11a) aufweist, die dazu ausgeführt ist, die rotatorische Bewegung des Antriebselementes (12) bezüglich der Primärstruktur (P) zu bewirken.

5. Vorrichtung (10) nach einem der vorhergehenden Ansprüche, aufweisend
ein drittes Tragelement (S3), welches mit dem zweiten Tragelement (S2) rotatorisch gekoppelt ist;
ein zweites Verbindungselement (L23), welches über eine sechste Rotationsachse (A6) rotatorisch bezüglich dem ersten Tragelement (S1) gelagert ist;
wobei das zweite Verbindungselement (L23) über eine siebente Rotationsachse (A7) mit dem dritten Tragelement (S3) rotatorisch gekoppelt ist;
wobei das dritte Tragelement (S3) mit dem zweiten Tragelement (S2) über eine achte, von der siebenten Rotationsachse (A7) beabstandeten Rotationsachse (A8) rotatorisch gekoppelt ist, sodass bei einer Bewegung des zweiten Tragelements (S2) um die fünfte Rotationsachse (A5) das zweite Tragelement (S2) mit einer Rotationsgeschwindigkeit bewegbar ist, die sich von einer Rotationsgeschwindigkeit des dritten Tragelements (S3) unterscheidet.

6. Vorrichtung (10) nach Anspruch 5, aufweisend:
ein drittes Hinterkanten-Klappensegment (22c), welches an dem dritten Tragelement (S3) fixiert und zusammen mit dem dritten Tragelement (S3) bewegbar ist.

7. Vorrichtung (10) nach einem der Ansprüche 5 oder 6,
wobei das erste Tragelement (S1) eine erste Längsausdehnungsrichtung aufweist, entlang welcher die zweite Rotationsachse (A2) von der fünften Rotationsachse (A5) beabstandet ist; und/oder
wobei das zweite Tragelement (S2) eine zweite Längsausdehnungsrichtung aufweist, entlang welcher die fünfte Rotationsachse (A5) von der achten Rotationsachse (A8) beabstandet ist.

8. Vorrichtung (10) nach einem der Ansprüche 5 bis 7,
wobei das zweite Verbindungselement (L23) einen zweiten Aktuator aufweist, der dazu ausgeführt ist, die Länge (R4) des zweiten Verbindungselements (L23) zu verändern, um somit die Rotationsgeschwindigkeit des zweiten Tragelements (S2) bezüglich der Rotationsgeschwindigkeit des dritten Tragelements (S3) anzupassen.

9. Verwendung einer Vorrichtung (10) nach einem der vorhergehenden Ansprüche zur Befestigung eines Hinterkanten-Klappensystems (22) eines Tragflügels (23) eines Luftfahrzeugs (24) an einer Primärstruktur (P) des Luftfahrzeugs (24).

10. Verfahren zum beweglichen Befestigen eines Fahrzeugsystems (20) an einer Primärstruktur (P) eines Fahrzeugs (30), aufweisend:
Bereitstellen einer rotatorischen Befestigung eines Antriebselementes (12) bezüglich der Primärstruktur (P) des Fahrzeugs (30, X1);
Rotatorisches Koppeln eines ersten Tragelements (S1) über eine erste Rotationsachse (A1) mit dem Antriebselement (12, X2);
Rotatorisches Lagern des ersten Tragelements (S1) über eine zweite Rotationsachse (A2) bezüglich der Primärstruktur (P) des Fahrzeugs (30, X3);
wobei die erste Rotationsachse (A1) von der zweiten Rotationsachse (A2) um einen konstanten Abstand (r1) beabstandet ist;
Rotatorisches Koppeln eines zweiten Tragelements (S2) mit dem ersten Tragelement (S1, X4);
Rotatorisches Lagern eines ersten Verbindungselements (L12) über eine dritte Rotationsachse (A3) bezüglich der Primärstruktur (P) des Fahrzeugs (30, X5);
Rotatorisches Koppeln des ersten Verbindungselements (L12) über eine vierte Rotationsachse (A4) mit dem zweiten Tragelement (S2, X6);
Rotatorisches Koppeln des zweiten Tragelements (S2) mit dem ersten Tragelement (S1) über eine fünfte, von der vierten Rotationsachse (A4) beabstandeten Rotationsachse (A5), sodass bei einer Bewegung des ersten Tragelements (S1) um die zweite Rotationsachse (A2) das erste Tragelement (S1) mit einer Rotationsgeschwindigkeit bewegbar ist, die sich von einer Rotationsgeschwindigkeit des zweiten Tragelements (S2) unterscheidet (X7);
wobei die vierte Rotationsachse (A4) von der fünften Rotationsachse (A5) um einen konstanten Abstand (r3) beabstandet ist; und
wobei die fünfte Rotationsachse (A5) von der ersten Rotationsachse (A1) beabstandet ist; **dadurch gekennzeichnet, dass**
das erste Verbindungselement (L12) einen ersten Aktuator aufweist, der dazu ausgeführt ist, eine Länge (R2) des ersten Verbindungselements (L12) zu verändern, um somit die Rotationsgeschwindigkeit des ersten Tragelements (S1) bezüglich der Rotationsgeschwindigkeit des zweiten Tragelements (S2) anzupassen.

## Claims

1. Device (10) for movably fastening a vehicle system (20) to a primary structure (P) of a vehicle (30), having:
a drive unit (11), which is designed to provide a rotatory movement of a drive element (12) with respect to the primary structure (P);
a first supporting element (S1), which is coupled in a rotatory manner to the drive element (12) via a first rotation axis (A1);
wherein the first supporting element (S1) is mounted in a rotatory manner with respect to the primary structure (P) of the vehicle (30) via a second rotation axis (A2);
a second supporting element (S2), which is coupled in a rotatory manner to the first supporting element (S1);
a first connecting element (L12), which is mounted in a rotatory manner with respect to the primary structure (P) of the vehicle (30) via a third rotation axis (A3);
wherein the first rotation axis (A1) is spaced apart from the second rotation axis (A2) by a constant distance (r1);
wherein the first connecting element (L12) is coupled in a rotatory manner to the second supporting element (S2) via a fourth rotation axis (A4);
wherein the second supporting element (S2) is coupled in a rotatory manner to the first supporting element (S1) via a fifth rotation axis (A5), which is spaced apart from the fourth rotation axis (A4), and therefore, during a movement of the first supporting element (S1) about the second rotation axis (A2), the first supporting element (S1) is movable with a rotational speed which differs from a rotational speed of the second supporting element (S2);
wherein the fourth rotation axis (A4) is spaced apart from the fifth rotation axis (A5) by a constant distance (r3);
wherein the fifth rotation axis (A5) is spaced apart from the first rotation axis (A1) **characterized in that** the first connecting element (L12) has a first actuator, which is designed to change a length (R2) of the first connecting element (L12) in order thus to adapt the rotational speed of the first supporting element (S1) with respect to the rotational speed of the second supporting element (S2).

2. Device (10) according to Claim 1,
wherein the vehicle system (20) is an aircraft system (21), which has a trailing-edge flap system (22) of an aerofoil (23) of an aircraft (24).

3. Device (10) according to either of the preceding claims, having
a first trailing-edge flap segment (22a), which is fixed to the first supporting element (S1) and is movable together with the first supporting element (S1); and
a second trailing-edge flap segment (22b), which is fixed to the second supporting element (S2) and is movable together with the second supporting element (S2) .

4. Device (10) according to one of the preceding claims,
wherein the drive unit (11) has a piston engine (11a), which is designed to bring about the rotatory movement of the drive element (12) with respect to the primary structure (P).

5. Device (10) according to one of the preceding claims, having
a third supporting element (S3), which is coupled in a rotatory manner to the second supporting element (S2) ;
a second connecting element (L23), which is mounted in a rotatory manner with respect to the first supporting element (S1) via a sixth rotation axis (A6);
wherein the second connecting element (L23) is coupled in a rotatory manner to the third supporting element (S3) via a seventh rotation axis (A7);
wherein the third supporting element (S3) is coupled in a rotatory manner to the second supporting element (S2) via an eighth rotation axis (A8), which is spaced apart from the seventh rotation axis (A7), and therefore, during a movement of the second supporting element (S2) about the fifth rotation axis (A5), the second supporting element (S2) is movable with a rotational speed which differs from a rotational speed of the third supporting element (S3).

6. Device (10) according to Claim 5, having:
a third trailing-edge flap segment (22c), which is fixed to the third supporting element (S3) and is movable together with the third supporting element (S3) .

7. Device (10) according to either of Claims 5 and 6,
wherein the first supporting element (S1) has a first longitudinal extent direction, along which the second rotation axis (A2) is spaced apart from the fifth rotation axis (A5); and/or
wherein the second supporting element (S2) has a second longitudinal extent direction, along which the fifth rotation axis (A5) is spaced apart from the eighth rotation axis (A8).

8. Device (10) according to one of Claims 5 to 7,
wherein the second connecting element (L23) has a second actuator, which is designed to change the length (R4) of the second connecting element (L23) in order thus to adapt the rotational speed of the second supporting element (S2) with respect to the rotational speed of the third supporting element (S3).

9. Use of a device (10) according to one of the preceding claims for fastening a trailing-edge flap system (22) of an aerofoil (23) of an aircraft (24) to a primary structure (P) of the aircraft (24).

10. Method for movably fastening a vehicle system (20) to a primary structure (P) of a vehicle (30), comprising:
providing a rotatory fastening of a drive element (12) with respect to the primary structure (P) of the vehicle (30, X1);
coupling a first supporting element (S1) to the drive element (12, X2) in a rotatory manner via a first rotation axis (A1);
mounting the first supporting element (S1) in a rotatory manner with respect to the primary structure (P) of the vehicle (30, X3) via a second rotation axis (A2) ;
wherein the first rotation axis (A1) is spaced apart from the second rotation axis (A2) by a constant distance (r1);
coupling a second supporting element (S2) to the first supporting element (S1, X4) in a rotatory manner;
mounting a first connecting element (L12) in a rotatory manner with respect to the primary structure (P) of the vehicle (30, X5) via a third rotation axis (A3) ;
coupling the first connecting element (L12) to the second supporting element (S2, X6) in a rotatory manner via a fourth rotation axis (A4);
coupling the second supporting element (S2) to the first supporting element (S1) in a rotatory manner via a fifth rotation axis (A5), which is spaced apart from the fourth rotation axis (A4), and therefore, during a movement of the first supporting element (S1) about the second rotation axis (A2), the first supporting element (S1) is movable with a rotational speed which differs (X7) from a rotational speed of the second supporting element (S2),
wherein the fourth rotation axis (A4) is spaced apart from the fifth rotation axis (A5) by a constant distance (r3);
wherein the fifth rotation axis (A5) is spaced apart from the first rotation axis (A1) **characterized in that**
the first connecting element (L12) has a first actuator, which is designed to change the length (R2) of the first connecting element (L12) in order thus to adapt the rotational speed of the first supporting element (S1) with respect to the rotational speed of the second supporting element (S2).

## Revendications

1. Dispositif (10) de fixation mobile d'un système de véhicule (20) à une structure primaire (P) d'un véhicule (30), comprenant :
une unité d'entraînement (11) qui est conçue pour produire un mouvement rotatif d'un élément d'entraînement (12) par rapport à la structure primaire (P) ;
un premier élément porteur (S1), lequel est accouplé de manière rotative à l'élément d'entraînement (12) par le biais d'un premier axe de rotation (A1) ;
le premier élément porteur (S1) étant monté de manière rotative par rapport à la structure primaire (P) du véhicule (30) par le biais d'un deuxième axe de rotation (A2) ;
un deuxième élément porteur (S2), lequel est accouplé de manière rotative au premier élément porteur (S1) ;
un premier élément de connexion (L12), lequel est monté de manière rotative par rapport à la structure primaire (P) du véhicule (30) par le biais d'un troisième axe de rotation (A3) ;
le premier axe de rotation (A1) étant espacé du deuxième axe de rotation (A2) d'une distance constante (r1) ;
le premier élément de connexion (L12) étant accouplé de manière rotative au deuxième élément porteur (S2) par le biais d'un quatrième axe de rotation (A4) ;
le deuxième élément porteur (S2) étant accouplé de manière rotative au premier élément porteur (S1) par le biais d'un cinquième axe de rotation (A5) espacé du quatrième axe de rotation (A4), de sorte que lors d'un mouvement du premier élément porteur (S1) autour du deuxième axe de rotation (A2) le premier élément porteur (S1) est mobile à une vitesse de rotation qui diffère d'une vitesse de rotation du deuxième élément porteur (S2) ;
le quatrième axe de rotation (A4) étant espacé du cinquième axe de rotation (A5) d'une distance constante (r3) ;
le cinquième axe de rotation (A5) étant espacé du premier axe de rotation (A1) ; **caractérisé en ce que** le premier élément de connexion (L12) comprend un premier actionneur qui est conçu pour changer une longueur (R2) du premier élément de connexion (L12), afin d'adapter ainsi la vitesse de rotation du premier élément porteur (S1) par rapport à la vitesse de rotation du deuxième élément porteur (S2).

2. Dispositif (10) selon la revendication 1,
le système de véhicule (20) étant un système d'aéronef (21), lequel comprend un système de volet de bord de fuite (22) d'une aile portante (23) d'un aéronef (24).

3. Dispositif (10) selon l'une des revendications précédentes, comprenant
un premier segment de volet de bord de fuite (22a), lequel est assujetti au premier élément porteur (S1) et est mobile conjointement avec le premier élément porteur (Sl) ; et
un deuxième segment de volet de bord de fuite (22b), lequel est assujetti au deuxième élément porteur (S2) et est mobile conjointement avec le deuxième élément porteur (S2) .

4. Dispositif (10) selon l'une des revendications précédentes,
l'unité d'entraînement (11) comprenant une machine à piston (11a) qui est conçue pour provoquer le mouvement rotatif de l'élément d'entraînement (12) par rapport à la structure primaire (P).

5. Dispositif (10) selon l'une des revendications précédentes, comprenant
un troisième élément porteur (S3), lequel est accouplé de manière rotative au deuxième élément porteur (S2) ; un deuxième élément de connexion (L23), lequel est monté de manière rotative par rapport au premier élément porteur (S1) par le biais d'un sixième axe de rotation (A6) ;
le deuxième élément de connexion (L23) étant accouplé de manière rotative au troisième élément porteur (S3) par le biais d'un septième axe de rotation (A7) ;
le troisième élément porteur (S3) étant accouplé de manière rotative au deuxième élément porteur (S2) par le biais d'un huitième axe de rotation (A8) espacé du septième axe de rotation (A7), de sorte que lors d'un mouvement du deuxième élément porteur (S2) autour du cinquième axe de rotation (A5) le deuxième élément porteur (S2) est mobile à une vitesse de rotation qui diffère d'une vitesse de rotation du troisième élément porteur (S3).

6. Dispositif (10) selon la revendication 5, comprenant :
un troisième segment de volet de bord de fuite (22c), lequel est assujetti au troisième élément porteur (S3) et est mobile conjointement avec le troisième élément porteur (S3).

7. Dispositif (10) selon l'une des revendications 5 ou 6,
le premier élément porteur (S1) présentant une première direction d'étendue longitudinale le long de laquelle le deuxième axe de rotation (A2) est espacé du cinquième axe de rotation (A5) ; et/ou
le deuxième élément porteur (S2) présentant une deuxième direction d'étendue longitudinale le long de laquelle le cinquième axe de rotation (A5) est espacé du huitième axe de rotation (A8).

8. Dispositif (10) selon l'une des revendications 5 à 7,
le deuxième élément de connexion (L23) comprenant un deuxième actionneur qui est conçu pour changer la longueur (R4) du deuxième élément de connexion (L23), afin d'adapter ainsi la vitesse de rotation du deuxième élément porteur (S2) par rapport à la vitesse de rotation du troisième élément porteur (S3).

9. Utilisation d'un dispositif (10) selon l'une des revendications précédentes pour la fixation d'un système de volet de bord de fuite (22) d'une aile portante (23) d'un aéronef (24) à une structure primaire (P) de l'aéronef (24).

10. Procédé de fixation mobile d'un système de véhicule (20) à une structure primaire (P) d'un véhicule (30), comprenant :
la production d'un mouvement rotatif d'un élément d'entraînement (12) par rapport à la structure primaire (P) du véhicule (30, X1) ;
l'accouplement rotatif d'un premier élément porteur (S1) à l'élément d'entraînement (12, X2) par le biais d'un premier axe de rotation (A1) ;
le montage rotatif du premier élément porteur (S1) par rapport à la structure primaire (P) du véhicule (30, X3) par le biais d'un deuxième axe de rotation (A2) ;
le premier axe de rotation (A1) étant espacé du deuxième axe de rotation (A2) d'une distance constante (r1) ;
l'accouplement rotatif d'un deuxième élément porteur (S2) au premier élément porteur (S1, X4) ;
le montage rotatif d'un premier élément de connexion (L12) par rapport à la structure primaire (P) du véhicule (30, X5) par le biais d'un troisième axe de rotation (A3) ;
l'accouplement rotatif du premier élément de connexion (L12) au deuxième élément porteur (S2, X6) par le biais d'un quatrième axe de rotation (A4) ;
l'accouplement rotatif du deuxième élément porteur (S2) au premier élément porteur (S1) par le biais d'un cinquième axe de rotation (A5) espacé du quatrième axe de rotation (A4), de sorte que lors d'un mouvement du premier élément porteur (S1) autour du deuxième axe de rotation (A2) le premier élément porteur (S1) est mobile à une vitesse de rotation qui diffère (X7) d'une vitesse de rotation du deuxième élément porteur (S2) ;
le quatrième axe de rotation (A4) étant espacé du cinquième axe de rotation (A5) d'une distance constante (r3) ; et
le cinquième axe de rotation (A5) étant espacé du premier axe de rotation (A1) ; **caractérisé en ce que** le premier élément de connexion (L12) comprend un premier actionneur qui est conçu pour changer une longueur (R2) du premier élément de connexion (L12), afin d'adapter ainsi la vitesse de rotation du premier élément porteur (S1) par rapport à la vitesse de rotation du deuxième élément porteur (S2).
